# EUROPÄISCHE PATENTSCHRIFT

(11) **EP 1 488 128 B1**
(45) Veröffentlichungstag und Bekanntmachung des Hinweises auf die Patenterteilung: **20.09.2006**
(21) Anmeldenummer: 02796721.5
(22) Anmeldetag: 23.12.2002
(51) Int. Cl.: F16D 69/04

(54) **REIBBELAGTRÄGER, INSBESONDERE BREMSSCHUH, FÜR FESTSTELL- ODER TROMMELBREMSEN SOWIE EIN DIESBEZÜGLICHES HERSTELLUNGSVERFAHREN SOWIE EINE VORRICHTUNG ZUR DURCHFÜHRUNG DES VERFAHRENS**
FRICTION LINING CARRIER, ESPECIALLY BRAKE SHOE, FOR PARKING OR DRUM BRAKES AND CORRESPONDING METHOD OF PRODUCTION AND DEVICE FOR CARRYING OUT SAID METHOD
SUPPORT DE GARNITURE DE FRICTION, EN PARTICULIER SABOT DE FREIN, POUR FREIN DE STATIONNEMENT OU FREIN A TAMBOUR, PROCEDE DE PRODUCTION CORRESPONDANT ET DISPOSITIF POUR METTRE EN OEUVRE CE PROCEDE

(30) Priorität: 25.03.2002 DE 10213315; 14.09.2002 DE 10242853
(43) Veröffentlichungstag der Anmeldung: 22.12.2004
(73) Patentinhaber: Metek Metallverarbeitungsgesellschaft mbH, 53340 Meckenheim (DE)
(72) Erfinder: JUNG, Friedrich, H., 65620 Waldbrunn-Ellar (DE)
(74) Vertreter: Müller, Eckhard
(86) Internationale Anmeldenummer: PCT/EP2002/014708
(87) Internationale Veröffentlichungsnummer: WO 2003/081075

(56) Entgegenhaltungen:
- EP-A- 1 106 859
- FR-A- 1 242 605
- US-A- 1 950 977
- US-A- 3 557 407
- US-A- 4 569 424

## Beschreibung

Die Erfindung bezieht sich auf ein Verfahren zur Herstellung eines Reibbelagträgers, insbesondere eines Bremsschuhs, bevorzugt für Feststell- oder Trommelbremsen, dessen Trägerfläche für den Reibbelag eine Mehrzahl von abstehenden Zähnen, Spänen oder dergleichen aufweist, die mittels eines Schneiden, Zähne oder dergleichen aufweisenden Werkzeuges aus der Trägerfläche einstückig herausgearbeitet sind.

Die Erfindung betrifft weiterhin auch eine Vorrichtung insbesondere zur Durchführung eines Verfahrens zur Herstellung eines Reibbelagträgers mit einem Werkzeug, welches Schneiden, Zähne oder dergleichen zum einstückigen Herausarbeiten von abstehenden Zähnen oder Spänen aus einer Trägerfläche eines Reibbelagträgers aufweist.

Schließlich betrifft die Erfindung auch einen Reibbelagträger, hergestellt nach dem Verfahren.

Aus der gattungsbildenden WO 00/49308 sind bereits ein Verfahren, eine Vorrichtung bzw. ein Reibbelagträger mit den eingangs genannten Merkmalen bekannt. Bei diesem Reibbelagträger, der insbesondere für den Einsatz bei Scheibenbremsen geeignet ist, handelt es sich um eine ebene Platte mit einer Trägerfläche für den Bremsbelag, wobei aus dieser Trägerfläche eine Mehrzahl von abstehenden Zähnen oder Spänen einstückig mittels eines Werkzeuges herausgearbeitet sind. Das Verfahren zeichnet sich dadurch aus, daß ein Werkzeug mit mehreren bündig, benachbart zueinander angeordneten Werkzeugteilen, welche auf der Bearbeitungsseite eine Mehrzahl von Schneiden oder Zähnen aufweisen, mittels einer Presse auf die Trägerfläche abgesenkt wird, wobei während des Eindringens der Schneiden oder Zähne in die,Trägerfläche benachbarte Werkzeugteile in entgegengesetzte Richtung parallel zur Trägerfläche bewegt werden. Durch eine entsprechend der Bewegungsrichtung ausgebildete Ausrichtung der Schneiden oder Zähne der Werkzeugteile werden somit durch eine gesteuerte Absenkbewegung des Werkzeuges hin auf die Trägerfläche und eine gesteuerte Verschiebung der Werkzeugteile parallel zur Trägerfläche die Zähne oder Späne einstückig aus der Trägerfläche herausgearbeitet. Die hierzu eingesetzte Vorrichtung weist eine Presse auf, welche die Werkzeugteile des Werkzeuges auf die Trägerfläche absenkt. Zusätzlich wirken mittels der Presse gesteuerte Anschläge über eine schiefe Ebene beidseitig auf die Werkzeugteile des Werkzeuges und sorgen für eine gesteuerte Verschiebung der Werkzeugteile entlang der Trägerfläche.

Nachteilig bei dem bekannten Verfahren und der entsprechenden Vorrichtung, wie auch bei dem Reibbelagträger nach der WO 00/49308, erweist sich, daß ein Einsatz bei Feststell- oder Trommelbremsen nicht möglich ist. Grundsätzlich hat sich das Herausarbeiten der Zähne oder Späne aus der Trägerfläche des im wesentlichen ebenen Scheibenbremsen-Reibbelagträgers insoweit als vorteilhaft erwiesen, als hierdurch der eigentliche Reibbelag beziehungsweise Bremsbelag mit dem Reibbelagträger verpreßt werden kann und sich dabei die Zähne oder Späne in den Reibbelag beziehungsweise Bremsbelag hineinarbeiten. Hierdurch wird eine hochfeste Verbindung zwischen dem Reibbelagträger und dem Reibbelag geschaffen. Gegenüber den herkömmlichen Verbindungen mittels Verklebung oder Vernietung hat diese Art der Verbindung von Reibbelagträger und Reibbelag den besonderen Vorteil, auch hohen, bei einer starken Beanspruchung auftretenden Abscherkräften standzuhalten.

Ein weiterer Reibbelagträger beziehungsweise Bremsschuh ist aus der US 4,799,579, insbesondere Figur 5 und 6 bekannt. Auch bei diesem Reibbelagträger sind aus der Trägerfläche für den Reibbelag Zähne, Späne oder dergleichen Elemente herausgearbeitet, die von der Trägerfläche des Reibbelagträgers nach außen abstehen. Der eigentliche Reibbelag wird dann dem Reibbelagträger angespritzt, wodurch die einzelnen Späne beziehungsweise Zähne von dem Reibbelagmaterial aufgenommen sind und für eine gute mechanische Verbindung zwischen Reibbelagträger und Reibbelag sorgen. Allerdings sind diese bekannten Reibbelagträger mit ebener Trägerfläche wiederum nur für Scheibenbremsen, aber nicht für Feststell- oder Trommelbremsen geeignet.

Aus der US 3,557,407 ist ein Verfahren zur Erzeugung von Vorsprüngen, wie Zähne oder Späne und zugeordneten Vertiefungen in einer Kunststoff- beziehungsweise Metallplatte bekannt. Insbesondere gemäß Figur 8 dieser Druckschrift sind zwei kooperierende Rollen vorgesehen, zwischen denen die zu bearbeitende ebene Platte hindurchgeführt wird. Auf der Außenfläche der einen Rolle sind eine Vielzahl von Zähnen mit keilförmiger Form vorgesehen, welche in die Oberfläche der zu bearbeitenden Platte hineingetrieben werden, während die Platte mit der weiteren Transportrolle gegen die Zahnrolle gepreßt wird. Dabei erfährt die Oberfläche der Platte eine Aufrauhung beziehungsweise Verzahnung, so daß Zähne oder Späne mit zugeordneten Vertiefungen einstückig aus der Oberfläche herausgearbeitet werden und von dieser abstehen. In wenigstens einer oder in beiden Rollen sind Induktionsheizungen vorgesehen, mit denen die zu bearbeitende Platte vor oder während der Bearbeitung bis nahe an den Schmelzpunkt des Materials erhitzt und somit zumindest oberflächlich erweicht wird. Auch diese bekannte Methode eignet sich lediglich zum Bearbeiten von im wesentlichen ebenen Platten, wobei sich die Bearbeitung aufgrund der unter Umständen starken Erhitzung des Plattenmaterials zusätzlich als aufwendig und technisch sehr komplex erweist.

Aus der US 4 569 424 ist ein Bremsschuh mit einer Trägerfläche für den Reibbelag bekannt, wobei mehrere Laschen aus der Trägerfläche zur zusätzliche Fixierung des Reibbelages herausgeschnitten sind.

Demgegenüber liegt der vorliegenden Erfindung die Aufgabe zugrunde, einen Reibbelagträger, ein Herstellungsverfahren hierzu sowie eine Vorrichtung zur Durchführung des verfahrens anzugeben, die auch zur Herstellung von Reibbelagträgern für Trommel- oder Feststellbremsen geeignet sind, wobei die entsprechenden Reibbelagsträger die Voraussetzung für eine innige, hohen Abscherkräften standhaltende verbindung mit dem Reibbelag erfüllen sollen.

Hinsichtlich des Verfahrens wird diese Aufgabe im wesentlichen dadurch gelöst, daß die Trägerfläche in Form eines Kreiszylindermantels gekrümmt ist und sich radial über einen Kreisbogen eines Vollkreises sowie axial in Richtung einer Mittelachse beziehungsweise Drehachse erstreckt, das Werkzeug im wesentlichen rotationssymmetrisch bezüglich einer Drehachse ausgebildet ist, von einem Antrieb in Rotation um seine Drehachse versetzt wird und mit einem Außenumfang entlang der Trägerfläche abrollt, wobei das Werkzeug und der Reibbelagträger jeweils in einer Drehbewegung mit gegensinniger Drehrichtung versetzt werden und der Reibbelagträger mit einem Bremsmoment beaufschlagt wird.

Durch diese Maßnahme ist es möglich, auch einen zylindermantelförmigen Reibbelagträger mit einer Oberflächenaufrauhung, welche aus von der Trägerfläche abstehenden Zähnen, Spänen oder dergleichen besteht, zu versehen, so daß nach Aufpressen des Reibbelags auf die Trägerfläche des Reibbelagträgers eine hohen Abscherkräften standhaltende Verbindung zwischen Reibbelag und Reibbelagträger gewährleistet ist.

Dabei wird durch eine gesteuerte Drehbewegung des Reibbelagträgers unter Aufbau eines entsprechenden Bremsmomentes auf den Reibbelagträger beziehungsweise Bremsschuh erreicht, der seinerseits ein von dem Bearbeitungswerkzeug ausgeübtes Drehmoment erfährt. Das Bearbeitungswerkzeug kann als Fräswerkzeug, als ein oder mehrere Sägeblätter ausgebildet sein. Die Drehgeschwindigkeit des Reibbelagträgers ist mit der Drehbewegung des Bearbeitungswerkzeuges abgestimmt, so daß sich in Verbindung mit der Anpreßkraft von Werkzeug und Reibbelagträger das gewünschte Verzahnungsprofil in der Trägerfläche des Reibbelagträgers ergibt. Wesentlich ist, daß mittels der Ausübung eines gesteuerten Bremsmomentes auf den Reibbelagträger und der damit einhergehenden Steuerung der Relativbewegung des Reibbelagträgers zum Bearbeitungswerkzeug der aus der Trägerfläche herausgearbeitete Zahn beziehungsweise Span nicht abgebrochen wird, sondern einstückiger Bestandteil des Reibbelagträgers ist.

Nach einer weiteren Ausgestaltung der Erfindung zeichnet sich das Verfahren dadurch aus, daß die Drehzahl von Werkzeug und Reibbelagträger unterschiedlich ist, bevorzugt die Drehzahl vom Werkzeug geringfügig größer ist als die des Reibbelagträgers.

Nach einer anderen alternativen Ausgestaltung ist es vorgesehen, daß Werkzeug und Reibbelagträger mit einer bevorzugt einstellbaren Kraft gegeneinander gepreßt werden. Aufgrund dieser Maßnahme ist es möglich, Höhe und Form beziehungsweise Profil der herausgearbeiteten Zähne oder Späne gesteuert einzustellen.

Nach einer anderen vorteilhaften Weiterbildung des Verfahrens ist es vorgesehen, daß die Drehachsen von Werkzeug und Reibbelagträger im wesentlichen parallel oder in einem spitzen Anstellwinkel zueinander ausgerichtet sind. Auch durch eine Variation des Anstellwinkels kann die Form der aus der Trägerfläche herausgearbeiteten Verzahnung variiert werden.

Schließlich hat es sich als vorteilhaft erwiesen, daß der Durchmesser D des Werkzeuges und der Radius R des Kreisbogens des Reibbelagträgers aufeinander abgestimmt sind und bevorzugt wird im Bereich von 3R > D > 2R liegen.

Vorrichtungsmäßig wird die Aufgabe dadurch gelöst, daß das Werkzeug im wesentlichen rotationssymmetrisch ausgebildet ist und einen Drehantrieb besitzt, eine Drehhalterung für den Reibbelagträger aufweist, wobei die Drehhalterung mit einer Einrichtung zur Erzeugung eines Bremsmoments gekoppelt ist. Hierdurch wird für eine gesteuerte Verzögerung der Drehbewegung der Drehhalterung für den Reibbelagträger gegenüber dem Drehantrieb für das Werkzeug gesorgt, so daß gezielt die Form und Höhe beziehungsweise das Profil der herausgearbeiteten Zähne beziehungsweise Späne beeinflußt werden kann. Im übrigen kann durch entsprechende Einstellung der Parameter auch einem möglichen Abbrechen der aus der Trägerfläche herausgearbeiteten Zähne oder Späne entgegengewirkt werden.

Die Einrichtung zur Erzeugung eines Bremsmomentes für die Drehhalterung kann ebenso, wie der Antrieb für das Werkzeug als Elektromotor ausgebildet ein, wobei diese Elektromotoren durch entsprechende elektronische Steuerungen hinsichtlich Drehzahl, Drehmoment beziehungsweise Bremsmoment eingestellt werden.

Es besteht jedoch auch die Möglichkeit, einen Antrieb lediglich für das Werkzeug und eine Bremseinrichtung für die Drehhalterung des Reibbelagträgers vorzusehen. Bei dieser Bremseinrichtung kann es sich beispielsweise um eine mechanische oder elektronische Verzögerungs- beziehungsweise Bremsvorrichtung handeln, mit der ein einstellbares Bremsmoment auf die Drehhalterung und damit den Reibbelagträger beziehungsweise Bremsschuh während der Bearbeitung der Trägerfläche ausgeübt wird.

Nach einer vorteilhaften Ausgestaltung der erfindungsgemäßen Vorrichtung ist es vorgesehen, daß das Werkzeug wenigstens ein kreisförmiges Sägeblatt, Fräserblatt oder dergleichen mit einer Vielzahl von auf dem Umfang angeordneten Zähnen, Schneiden oder dergleichen aufweist.

Insbesondere besitzt das Werkzeug erfindungsgemäß mehrere, im wesentlichen identische, koaxial und bündig einander anliegend angeordnete Sägeblätter beziehungsweise Fräserblätter oder dergleichen, so daß eine größere Fläche der Trägerfläche des Reibbelagträgers in einem einzigen Bearbeitungsschritt bearbeitet werden kann.

Von Vorteil sind die Zähne, Schneiden oder dergleichen benachbarter Säge- beziehungsweise Fräserblätter versetzt zueinander angeordnet. Aufgrund dieser Maßnahme ist es möglich, die Zähne oder Späne benachbarter Reihen relativ zueinander zu versetzen beziehungsweise asynchron anzuordnen.

Nach einer anderen vorteilhaften Ausgestaltung ist es vorgesehen, daß die Drehachsen von Drehantrieb und Drehhalterung aufeinander zu beziehungsweise voneinander weg stellbar sind. Hierzu können entsprechende Verstellmittel vorgesehen sein, so daß ein gesteuertes Anpressen von Werkzeug am Reibbelagträger beziehungsweise umgekehrt während der Bearbeitung durchgeführt werden kann.

Weiterhin besteht die Möglichkeit, daß die Drehachsen von Drehantrieb und Drehhalterung im wesentlichen parallel oder gegebenenfalls spitzwinklig zueinander angeordnet sind. Aufgrund dieser Maßnahme kann die Oberflächenstrukturierung in Form, Höhe der Zähne beziehungsweise Spane sowie Tiefe der benachbarten Vertiefung gesteuert beeinflußt werden.

Hinsichtlich des Reibbelagträgers, bevorzugt hergestellt nach dem vorerwähnten Verfahren zeichnet sich die Erfindung im wesentlichen dadurch aus, daß die Trägerfläche für den Reibbelag in Form eines Kreiszylindermantels gekrümmt ist und sich über einen Kreisbogen eines Vollkreises erstreckt, wobei die Trägerfläche eine Mehrzahl von abstehenden Zähnen, Späne oder dergleichen aufweist. Neben den von der Trägerfläche nach außen stehenden Zähnen, Spänen weist diese entsprechende Einsenkungen beziehungsweise Vertiefungen auf, die in Folge des einstückigen Herausarbeitens der Zähne, Späne entstehen. Wird auf eine derart bearbeitete kreiszylindermantelförmige Trägerfläche der Reibbelag aufgepreßt, entsteht eine äußerst innige, hohen Abscherkräften standhaltende Verbindung, so daß ein derartiger Reibbelagträger beziehungsweise Bremsschuh auch für äußerst stark beanspruchte Bremsen, wie beispielsweise bei Lastkraftwagen, geeignet ist.

Nach einer ersten vorteilhaften Weiterbildung der Erfindung ist es vorgesehen, daß die Trägerfläche im wesentlichen vollflächig mit Zähnen, Spänen oder dergleichen ausgestattet ist.

Es besteht jedoch auch die Möglichkeit, daß die Trägerfläche lediglich über Teilflächen mit Zähnen, Spänen oder dergleichen ausgestattet ist.

Die Trägerfläche kann beispielsweise in einem mittigen Streifenabschnitt mit Zähnen, Spänen oder dergleichen versehen sein.

Denkbar ist es auch, daß die Trägerfläche lediglich in äußeren Randabschnitten mit Zähnen, Spänen oder dergleichen versehen ist.

Die Zähne, Späne oder dergleichen sind vorteilhafterweise in im wesentlichen parallelen Reihen, Streifen oder dergleichen auf der Trägerfläche angeordnet.

Nach einer anderen Ausgestaltung der Erfindung können die Zähne, Späne oder dergleichen benachbarter Reihen versetzt zueinander angeordnet sein.

Der Reibbelagträger besteht insbesondere aus Metall, bevorzugt aus Stahl.

Nach einer vorteilhaften Weiterbildung des Reibbelagträgers in Kombination mit einem Reibbelag oder Bremsbelag ist es vorgesehen, daß dieser Reib- oder Bremsbelag der Trägerfläche aufgepreßt ist, wobei sich die Zähne, Späne oder dergleichen in den Reib- oder Bremsbelag eingraben.

Der Reibbelagträger in Kombination mit dem aufgepreßten Reib- oder Bremsbelag eignet insbesondere durch die Verwendung als Bremsschuh in einer Trommel- oder Feststellbremse für Fahrzeuge, insbesondere Kraftfahrzeuge. '

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in schematischer Darstellung ein Ausführungsbeispiel der erfindungsgemäßen Vorrichtung in Seitenansicht,
- Figur 2: die Vorrichtung der Figur 1 in Frontansicht entlang der Schnittlinie II-II der Figur 1,
- Figur 3: eine Draufsicht auf die bereits mit Zähnen, Spänen versehene Trägerfläche des Reibbelagträgers nach der Bearbeitung,
- Figur 4: einen Reibbelagträger in Seitenansicht,
- Figur 5a, b und c: verschiedene Ausführungsformen der Ausbildung und Anordnung der Zähne, Späne auf der abgewickelt dargestellten Trägerfläche des Reibbelagträgers und
- Figur 6: die abgewickelt dargestellte Trägerfläche des Reibbelagträgers in Seitenansicht.

Das Verfahrens zur Herstellung eines Reibbelagträgers 10, insbesondere eines Bremsschuhs, dessen Trägerfläche 12 für den Reibbelag eine Mehrzahl von abstehenden Zähnen, Spänen 14 aufweist, die mittels eines Schneiden oder Zähne 16 oder dergleichen aufweisenden Werkzeuges 18 aus der Trägerfläche 12 einstückig herausgearbeitet sind, zeichnet sich dadurch aus, daß die Trägerfläche 12 in Form eines Kreiszylindermantels 20 gekrümmt ist und sich radial über einen Kreisbogen eines Vollkreises sowie axial in Richtung einer Mittelachse 24 beziehungsweise Drehachse erstreckt. Das Werkzeug 18 ist im wesentlichen rotationssymmetrisch bezüglich einer Drehachse 22 ausgebildet und rollt mit einem Außenumfang entlang der Trägerfläche 12 ab, wobei das Werkzeug 18 und der Reibbelagträger 10 jeweils in eine Drehbewegung mit gegensinniger Drehrichtung 26, 28 versetzt werden. Das Werkzeug 18 wird von einem Antrieb in Rotation um die Drehachse 22 versetzt, wobei der Reibbelagträger 10 mit einem Bremsmoment beaufschlagt ist. Dadurch wird ein entsprechender Zahn oder Span aus der Trägerfläche 12 des Reibbelagträgers 10 beziehungsweise des Bremsschuhs herausgelöst, und es entsteht eine Verzahnung.

Die Drehzahl von Werkzeug 18 und Reibbelagträger 10 ist unterschiedlich eingestellt, bevorzugt ist die Drehzahl der Werkzeuges 18 geringfügig größer als die des Reibbelagträgers 10. Weiterhin ist es vorgesehen, daß das Werkzeug 18 und der Reibbelagträger 10 mit einer bevorzugt einstellbaren Kraft gegeneinander gepreßt werden, wodurch sich das gewünschte Span- beziehungsweise Zahnprofil der Trägerfläche 12 ergibt.

Die Drehachsen 22, 24 von Werkzeug 18 und Reibbelagträger 10 sind im wesentlichen parallel oder auch in einem spitzen Anstellwinkel, bevorzugt bis zu 30°, zueinander angeordnet. Auch sind der Durchmesser D des Werkzeuges 18 und der Radius R des Kreisbogens des Reibbelagträgers 10 aufeinander abgestimmt und liegen bevorzugt im Bereich 3R > D > 2R. Aufgrund einer derartigen Abstimmung kann die Form des Zahnes oder Spanes 14 wie auch die Abwinkelung des Zahnes oder Spanes 14 relativ zur Trägerfläche 12 eingestellt werden.

Das Werkzeug 18 weist Schneiden oder Zähne 16 zum einstückigen Herausarbeiten der abstehenden Zähne oder Späne 14 aus der Trägerfläche 12 des Reibbelagträgers 10 auf. Das Werkzeug 18 ist im wesentlichen rotationssymmetrisch ausgebildet und besitzt einen Drehantrieb. Hierbei ist eine Drehhalterung 30 für den Reibbelagträger 10 mit einer Einrichtung zur Erzeugung eines Bremsmoments gekoppelt.

Die erfindungsgemäße Vorrichtung zeichnet sich dadurch aus, daß bei der Relativbewegung des Reibbelagträgers 10 an dem Werkzeug 18 der einstückig aus der Trägerfläche 12 herausgearbeitete Zahn oder Span 14 nicht abgebrochen wird. Dies wird durch die gesteuerte Drehbewegung des Reibbelagträgers 10 beziehungsweise Bremsschuhs mit Aufbauen eines entsprechenden Bremsmomentes auf den Reibbelagträger 10 erreicht, welcher seinerseits ein von dem Werkzeug 18 auf den Reibbelagträger 10 ausgeübtes Drehmoment erfährt. Auch die Drehgeschwindigkeit des Reibbelagträgers 10 ist auf die Drehbewegung des Werkzeuges 18, beispielsweise eines Fräsers, abgestimmt und beeinflußt in Verbindung mit der eingestellten Anpreßkraft des Werkzeuges 18 auf den Bremsschuh beziehungsweise den Reibbelagträger 10 das gewünschte Profil der Verzahnung der Trägerfläche 12.

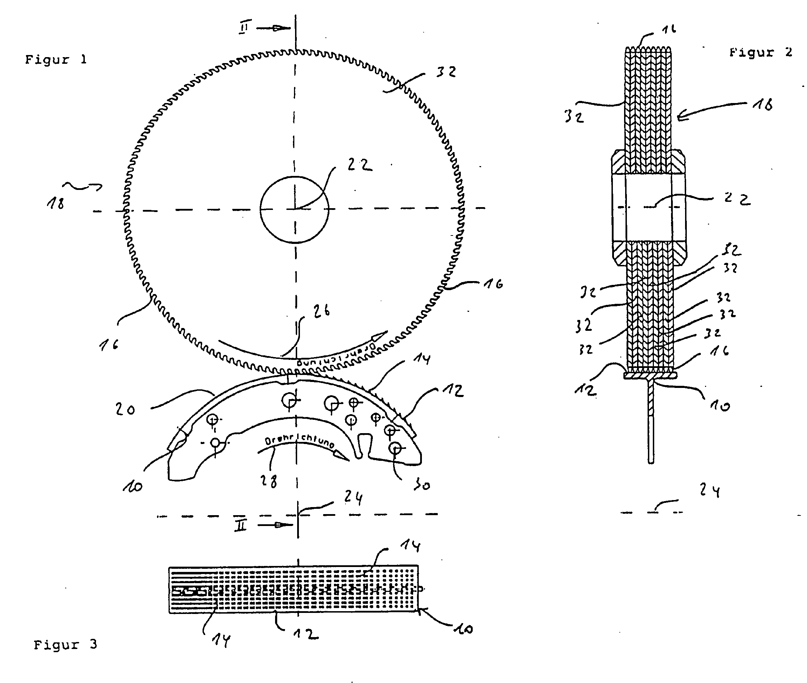

Das Werkzeug 18 weist wenigstens ein kreisförmiges Sägeblatt 32 beziehungsweise Fräserblatt mit einer Vielzahl auf dem Umfang angeordneten Zähnen, Schneiden 16 oder dergleichen auf. Bevorzugt besteht das Werkzeug 18, wie beispielsweise aus Figur 2 ersichtlich ist, aus mehreren, im wesentlichen identischen, koaxialen und bündig einander anliegenden Sägeblättern 32 beziehungsweise Fräsblättern. Die Zähne beziehungsweise Schneiden 16 benachbarter Sägeblätter 32 sind gegebenenfalls versetzt zueinander angeordnet.

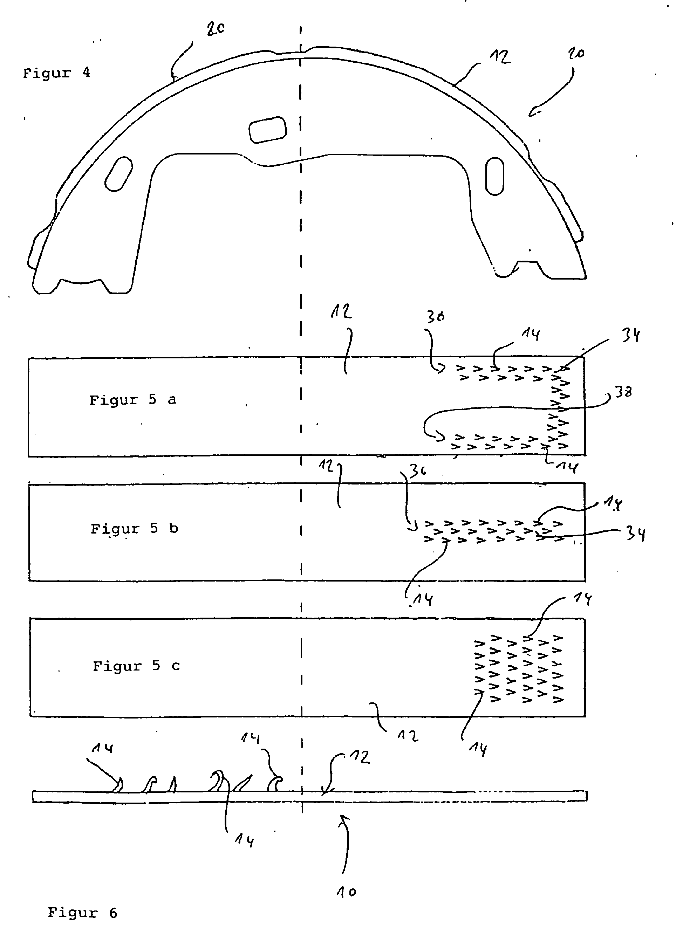

Der insbesondere nach dem beschriebenen Verfahren hergestellte Reibbelagträger 10 weist, wie aus Figur 1 und 4 ersichtlich ist, eine Trägerfläche 12 für den Reib- oder Bremsbelag auf, die in Form eines Kreiszylindermantels 20 gekrümmt ist und sich über einen Kreisbogen eines Vollkreises erstreckt, wobei die Trägerfläche 12 eine Mehrzahl von abstehenden Zähnen beziehungsweise Spänen 14 besitzt.

Gemäß der schematischen Darstellung der Figur 5c kann die Trägerfläche 12 des Reibbelagträgers 10 im wesentlichen vollflächig mit Zähnen oder Spänen 14 versehen sein. Es besteht jedoch auch die Möglichkeit, daß die Trägerfläche 12 über Teilflächen 34, wie dies in den Figuren 5a, b schematisch dargestellt ist, mit Zähnen, Spänen 14 ausgestattet ist. Gemäß der Darstellung der Figur 5b kann die Trägerfläche 12 im Bereich eines mittigen Streifenabschnitts 36 mit den Zähnen oder Spänen 14 ausgestattet sein. Auch besteht die Möglichkeit gemäß der schematischen Darstellung der Figur 5a, daß äußere Randabschnitte 38 der Trägerfläche 12 mit Zähnen oder Spänen 14 versehen sind. In diesem Fall, in dem lediglich die Außenkontur der Trägerfläche 12 mit Zähnen oder Spänen 14 versehen ist, wird bereits eine wesentliche Verminderung der Kantenablösung des auf der Trägerfläche 12 aufgepreßten Reibbelages erreicht. Insoweit kann weiterhin auch ein Dichtrand für die Preßoperation beim Aufbringen des Bremsbelagmaterials vorgesehen sein, der sich gemäß der schematischen Abbildung der Figur 5a seitlich außen an die verzahnten Bereiche über beispielsweise 2 mm erstreckt.

Die Zähne oder Späne 14 können in im wesentlichen parallelen Reihen oder Streifen auf der Trägerfläche 12 angeordnet sein. Weiterhin besteht die Möglichkeit, wie dies in den Figuren 5a, b und c angedeutet ist, daß die Zähne, Spane 14 oder dergleichen benachbarter Reihen versetzt zueinander angeordnet sind.

Der Reibbelagträger 10 besteht aus Metall, bevorzugt aus Stahl oder einem vergleichbaren Material. Nach Herausarbeiten der Zähne beziehungsweise Späne 14 aus der Trägerfläche 12 des Reibbelagträgers 10 wird diesem ein Reib- oder Bremsbelag aufgepreßt, wobei sich die Zähne beziehungsweise Späne 14 in den Reib- oder Bremsbelag eingraben. Der Reibbelagträger beziehungsweise Bremsschuh kommt bevorzugt bei einer Trommel- oder Feststellbremse für Fahrzeuge, zum Beispiel Kraftfahrzeuge, zum Einsatz.

Durch das beschriebene Verfahren beziehungsweise mittels der beschriebenen Vorrichtung kann ein Reibbelagträger 10 hergestellt werden, bei dem eine erheblich verbesserte Verbindung mit dem aufgebrachten beziehungsweise aufgepreßten Reib- oder Bremsbelag herstellbar ist.

### Bezugszeichenliste

- 10.: Reibbelagträger
- 12: Trägerfläche
- 14: Zahn, Span
- 16: Schneide, Zahn
- 18: Werkzeug
- 20: Kreiszylindermantel
- 22: Drehachse
- 24: Mittelachse/Drehachse
- 26: Drehrichtung von 18
- 28: Drehrichtung von 10
- 30: Drehhalterung
- 32: Sägeblatt
- 34: Teilfläche
- 36: mittiger Streifenabschnitt
- 38: äußerer Randabschnitt

## Patentansprüche

1. Verfahren zur Herstellung eines Reibbelagträgers (10), insbesondere eines Bremsschuhs, dessen Trägerfläche (12) für den Reibbelag eine Mehrzahl von abstehenden Zähnen, Spänen (14) oder dergleichen aufweist, die mittels eines Schneiden, Zähne (16) oder dergleichen aufweisenden werkzeuges (18) aus der Trägerfläche (12) einstückig herausgearbeitet sind, **dadurch gekennzeichnet, daß** die Trägerfläche (12) in Form eines Kreiszylindermantels (20) gekrümmt ist und sich radial über einen Kreisbogen eines Vollkreises sowie axial in Richtung einer Mittelachse (24) beziehungsweise Drehachse (22) erstreckt, das Werkzeug (18) im wesentlichen rotationssymmetrisch bezüglich einer Drehachse (22) ausgebildet ist, von einem Antrieb in Rotation um die Drehachse (22) versetzt wird und mit einem Außenumfang entlang der Trägerfläche (12) abrollt, wobei das Werkzeug (18) und der Reibbelagträger (10) jeweils in eine Drehbewegung mit gegensinniger Drehrichtung (26, 28) versetzt werden und der Reibbelagträger (10) mit einem Bremsmoment beaufschlagt ist.

2. Verfahren nach Anspruch 1, **dadurch gekennzeichnet, daß** die Drehzahl von Werkzeug (18) und Reibbelagträger (10) unterschiedlich ist, bevorzugt die Drehzahl vom Werkzeug (18) geringfügig größer als die des Reibbelagträgers (10) ist.

3. Verfahren nach einem der vorhergehenden Ansprüche, **dadurch gekennzeichnet, daß** Werkzeug (18) und Reibbelagträger (10) mit einer bevorzugt einstellbaren Kraft gegeneinander gepreßt sind.

4. Verfahren nach einem der vorhergehenden Ansprüche, **dadurch gekennzeichnet, daß** Drehachsen (22, 24) von Werkzeug (18) und Reibbelagträger (10) im wesentlichen parallel oder in einem spitzen Anstellwinkel zueinander angeordnet sind.

5. Verfahren nach einem der vorhergehenden Ansprüche, **dadurch gekennzeichnet, daß** der Durchmesser D des Werkzeuges (18) und der Radius R des Kreisbogens des Reibbelagträgers (10) aufeinander abgestimmt sind, bevorzugt mit 3R > D > 2R.

6. Vorrichtung insbesondere zur Durchführung des Verfahrens nach einem der vorhergehenden Ansprüche mit einem Werkzeug (18), welches Schneiden, Zähne (16) oder dergleichen zum einstückigen Herausarbeiten von Zähnen, Spänen (14) oder dergleichen aus einer Trägerfläche (12) eines Reibbelagträgers (10) aufweist, **dadurch gekennzeichnet, daß** das Werkzeug (18) im wesentlichen rotationssymmetrisch ausgebildet ist und einen Drehantrieb besitzt, mit einer Drehhalterung (30) für den Reibbelagträger (10), wobei die Drehhalterung (30) mit einer Einreichung zur Erzeugung eines Bremsmoments gekoppelt ist.

7. Vorrichtung nach Anspruch 6, **dadurch gekennzeichnet, daß** das Werkzeug (18) wenigstens ein kreisförmiges Sägeblatt (32) aufweist mit einer Vielzahl auf dem Umfang angeordneten Zähnen, Schneiden (16) oder dergleichen.

8. Vorrichtung nach Anspruch 6 oder 7, **dadurch gekennzeichnet, daß** das Werkzeug (18) mehrere, im wesentlichen identische, koaxiale und bündig einander anliegend angeordnete Sägeblätter (32) aufweist.

9. Vorrichtung nach Anspruch 8, **dadurch gekennzeichnet, daß** die Zähne beziehungsweise Schneiden (16) benachbarter Sägeblätter (32) versetzt zueinander angeordnet sind.

10. Vorrichtung nach einem der vorhergehenden Ansprüche 6 bis 9, **dadurch gekennzeichnet, daß** die Drehachsen (22, 24) von Drehantrieb und Drehhalterung (30) aufeinander zu beziehungsweise voneinander weg stellbar sind.

11. Vorrichtung nach einem der vorhergehenden Ansprüche 6 bis 10, **dadurch gekennzeichnet, daß** die Drehachsen (22, 24) von Drehantrieb und Drehhalterung (30) im wesentlichen parallel oder spitzwinklig zueinander ausgerichtet sind.

12. Reibbelagträger (10), hergestellt nach dem Verfahren gemäß einem der vorhergehenden Ansprüche 1 bis 5, **gekennzeichnet durch** eine Trägerfläche (12) für den Reibbelag, die in Form eines Kreiszylindermantels (20) gekrümmt ist und sich über einen Kreisbogen eines Vollkreises erstreckt, wobei die Trägerfläche (12) eine Mehrzahl von abstehenden Zähnen, Spänen (14) oder dergleichen aufweist.

13. Reibbelagträger nach Anspruch 12, **dadurch gekennzeichnet, daß** die Trägerfläche (12) im wesentlichen vollflächig mit Zähnen beziehungsweise Spänen (14) ausgestattet ist.

14. Reibbelagträger nach Anspruch 12, **dadurch gekennzeichnet, daß** die Trägerfläche (12) über Teilflächen (34) mit Zähnen, Spanen (14) oder dergleichen ausgestattet ist.

15. Reibbelagträger nach Anspruch 14, **dadurch gekennzeichnet, daß** in einem mittigen Streifenabschnitt (36) der Trägerfläche (12) Zähne, Späne (14) oder dergleichen angeordnet sind.

16. Reibbelagträger nach Anspruch 14, **dadurch gekennzeichnet, daß** in äußeren Randabschnitten (30) der Trägerfläche (12) Zähne, Späne (14) oder dergleichen angeordnet sind.

17. Reibbelagträger nach einem der vorhergehenden Ansprüche 12 bis 16, **dadurch gekennzeichnet, daß** die Zähne, Späne (14) oder dergleichen in im wesentlichen parallelen Reihen, Streifen oder dergleichen auf der Trägerfläche (12) angeordnet sind.

18. Reibbelagträger nach Anspruch 17, **dadurch gekennzeichnet, daß** die Zähne, Späne (14) oder dergleichen benachbarter Reihen versetzt zueinander angeordnet sind.

19. Reibbelagträger nach einem der Ansprüche 12 bis 18, **dadurch gekennzeichnet, daß** der Reibbelagträger (10) aus Metall, bevorzugt Stahl oder dergleichen Material, besteht.

20. Reibbelagträger nach einem der vorhergehenden Ansprüche 12 bis 19 in Kombination mit einem Reib- oder Bremsbelag, **dadurch gekennzeichnet, daß** der Reib- oder Bremsbelag der Trägerfläche (12) aufgepreßt ist, wobei sich die Zähne, Späne (14) oder dergleichen in dem Reib- oder Bremsbelag eingraben.

21. Reibbelagträger nach Anspruch 20, **gekennzeichnet durch** die Verwendung in einer Trommel- oder Feststellbremse für Fahrzeuge, insbesondere Kraftfahrzeuge.

## Claims

1. Method of producing a friction lining carrier (10), particularly a brake shoe, the carrier surface (12) of which, for the friction lining, has a plurality of upstanding teeth, splinters (14) or the like which are integrally worked out of the carrier surface (12) by means of a tool (18) having cutting edges, teeth (16) or the like, **characterised in that** the carrier surface (12) is curved in the form of a circular cylinder circumference (20) and extends radially over an arc of a solid circle as well as axially in the direction of a centre axis (24) or rotational axis (22), the tool (18) is constructed substantially rotationally symmetrically with respect to a rotational axis (22), is set into rotation about the rotational axis (22) by a drive, and rolls by an outer circumference along the carrier surface (12), wherein the tool (18) and the friction lining carrier (10) are respectively set into rotational movement with rotational direction (26, 28) in opposite sense and the friction lining carrier (10) is acted on by a braking moment.

2. Method according to claim 1, **characterised in that** the rotational speed of tool (18) and friction lining carrier (10) is different, the rotational speed of the tool (18) preferably being slightly greater than that of the friction lining carrier (10).

3. Method according to one of the preceding claims, **characterised in that** tool (18) and friction lining carrier (10) are pressed against one another by a preferably settable force.

4. Method according to one of the preceding claims, **characterised in that** the rotational axes (22, 24) of tool (18) and friction lining carrier (10) are arranged substantially parallel or at an acute angle of incidence relative to one another.

5. Method according to one of the preceding claims, **characterised in that** the diameter D of the tool (18) and the radius R of the arc of the friction lining carrier (10) are matched to one another, preferably with 3R > D > 2R.

6. Device for carrying out the method according to one of the preceding claims with a tool (18), which has cutting edges, teeth (16) or the like for integral working out of teeth, splinters (14) or the like from a carrier surface (12) of a friction lining carrier (10), **characterised in that** the tool (18) is of substantially rotationally symmetrical construction and has a rotary drive, with a rotary mount (30) for the friction lining carrier (10), wherein the rotary mount (30) is coupled with a device for producing a braking moment.

7. Device according to claim 6, **characterised in that** the tool (18) has at least one circular saw blade (32) with a plurality of teeth, cutting edges (16) or the like arranged on the circumference.

8. Device according to claim 6 or 7, **characterised in that** the tool (18) has several substantially identical, coaxial saw blades (32) arranged to bear flushly against one another.

9. Device according to claim 8, **characterised in that** the teeth or cutting edges (15) of adjacent saw blades (32) are arranged to be offset relative to one another.

10. Device according to one of the preceding claims 6 to 9, **characterised in that** the rotational axes (22, 24) of rotary drive and rotary mount (30) are settable on one another or away from one another.

11. Device according to one of the preceding claims 6 to 10, **characterised in that** the rotational axes (22, 24) of rotary drive and rotary mount (30) are aligned to be substantially parallel or at an acute angle relative to one another.

12. Friction lining carrier (10) produced in accordance with the method according to one of the preceding claims 1 to 5, **characterised by** a carrier surface (12) for the friction lining, which is curved in the form of a circular cylinder circumference (20) and extends over an arc of a solid circle, wherein the carrier surface (12) has a plurality of upstanding teeth, splinters (14) or the like.

13. Friction lining carrier according to claim 12, **characterised in that** the carrier surface (12) is furnished over substantially the whole area with teeth or splinters (14).

14. Friction lining carrier according to claim 12, **characterised in that** the carrier surface (12) is furnished over part areas (34) with teeth, splinters (14) or the like.

15. Friction lining carrier according to claim 14, **characterised in that** teeth, splinters (14) or the like are arranged in a central strip section (36) of the carrier surface (12).

16. Friction lining carrier according to claim 14, **characterised in that** teeth, splinters (14) or the like are arranged in outer edge sections (30) of the carrier surface (12).

17. Friction lining carrier according to one of the preceding claims 12 to 16, **characterised in that** the teeth, splinters (14) or the like are arranged in substantially parallel rows, strips or the like on the carrier surface (12).

18. Friction lining carrier according to claim 17, **characterised in that** the teeth, splinters (14) or the like of adjacent rows are arranged to be offset relative to one another.

19. Friction lining carrier according to one of claims 12 to 18, **characterised in that** the friction lining carrier (10) consists of metal, preferably of steel, or the like material.

20. Friction lining carrier according to one of the preceding claims 12 to 19 in combination with a friction or brake lining, **characterised in that** the frictional brake lining is pressed onto the carrier surface (12), wherein the teeth, splinters (14) or the like dig into the frictional brake lining.

21. Friction lining carrier according to claim 20, **characterised by** use in a drum brake or parking brake for vehicles, particularly motor vehicles.

## Revendications

1. Procédé de fabrication d'un support de garniture de friction (10), en particulier d'un sabot de frein, dont la surface de support (12) pour la garniture de friction comporte une pluralité de dents en saillie, d'aspérités (14) ou éléments similaires, qui ont été usinées d'un seul tenant hors de la surface de support (12) au moyen d'un outil (18) comportant des tranchants, des dents (16) ou éléments similaires, **caractérisé en ce que** la surface de support (12) est incurvée sous forme d'enveloppe cylindrique circulaire (20) et s'étend dans le sens radial sur un arc de cercle d'un cercle entier, ainsi que dans le sens axial dans la direction d'un axe médian (24) ou axe de rotation (22), l'outil (18) est réalisé sensiblement à symétrie de révolution par rapport à un axe de rotation (22), est entraîné en rotation par un moteur autour de l'axe de rotation (22) et roule avec un pourtour extérieur le long de la surface de support (12), l'outil (18) et le support de garniture de friction (10) étant entraînés chacun en rotation dans un sens de rotation (26, 28) opposé et le support de garniture de friction (10) étant sollicité par un moment de freinage.

2. Procédé selon la revendication 1, **caractérisé en ce que** la vitesse de rotation de l'outil (18) et celle du support de garniture de friction (10) sont différentes, de préférence la vitesse de rotation de l'outil (18) est légèrement supérieure à celle du support de garniture de friction (10).

3. Procédé selon l'une quelconque des revendications précédentes, **caractérisé en ce que** l'outil (18) et le support de garniture de friction (10) sont pressés l'un contre l'autre avec une force de préférence réglable.

4. Procédé selon l'une quelconque des revendications précédentes, **caractérisé en ce que** les axes de rotation (22, 24) de l'outil (18) et du support de garniture de friction (10) sont sensiblement parallèles ou sont agencés l'un par rapport à l'autre en formant un angle de contact aigu.

5. Procédé selon l'une quelconque des revendications précédentes, **caractérisé en ce que** le diamètre D de l'outil (18) et le rayon R de l'arc de cercle du support de garniture de friction (10) sont ajustés l'un à l'autre, de préférence avec 3R > D > 2R

6. Dispositif destiné à la mise en oeuvre du procédé selon l'une quelconque des revendications précédentes, avec un outil (18) qui comporte des tranchants, des dents (16) ou éléments similaires pour usiner d'un seul tenant des dents, des aspérités (14) ou éléments similaires hors d'une surface de support (12) d'un support de garniture de friction (10), **caractérisé en ce que** l'outil (18) est réalisé sensiblement à symétrie de révolution et comporte un moteur d'entraînement en rotation, avec un support de rotation (30) pour le support de garniture de friction (10), le support de rotation (30) étant couplé à un dispositif destiné à générer un moment de freinage.

7. Dispositif selon la revendication 6, **caractérisé en ce que** l'outil (18) comporte au moins une lame de scie (32) circulaire avec une pluralité de dents, de tranchants (16) ou éléments similaires agencés sur le pourtour.

8. Dispositif selon la revendication 6 ou 7, **caractérisé en ce que** l'outil (18) comporte plusieurs lames de scie (32) coaxiales, sensiblement identiques et situées à fleur les unes par rapport aux autres.

9. Dispositif selon la revendication 8, **caractérisé en ce que** les dents ou les tranchants (16) de deux lames de scie (32) voisines sont décalés les uns par rapport aux autres.

10. Dispositif selon l'une quelconque des revendications 6 à 9, **caractérisé en ce que** les axes de rotation (22, 24) du moteur d'entraînement en rotation et du support de rotation (30) peuvent être réglés en s'approchant l'un de l'autre ou en s'écartant l'un de l'autre.

11. Dispositif selon l'une quelconque des revendications 6 à 10, **caractérisé en ce que** les axes de rotation (22, 24) du moteur d'entraînement en rotation et du support de rotation (30) sont disposés sensiblement parallèlement ou en formant un angle aigu entre eux.

12. Support de garniture de friction (10), réalisé selon le procédé selon l'une quelconque des revendications 1 à 5, **caractérisé par** une surface de support (12) pour la garniture de friction, laquelle est incurvée sous forme d'enveloppe cylindrique circulaire (20) et s'étend sur un arc de cercle d'un cercle entier, la surface de support (12) comportant une pluralité de dents en saillie, d'aspérités (14) ou éléments similaires.

13. Support de garniture de friction selon la revendication 12, **caractérisé en ce que** la surface de support (12) est réalisée avec des dents ou aspérités (14) sensiblement sur toute la surface.

14. Support de garniture de friction selon la revendication 12, **caractérisé en ce que** la surface de support (12) est réalisée avec des dents, des aspérités (14) ou éléments similaires sur des surfaces partielles (34).

15. Support de garniture de friction selon la revendication 14, **caractérisé en ce que** des dents, des aspérités (14) ou éléments similaires sont réalisés sur une bande centrale (36) de la surface de support (12).

16. Support de garniture de friction selon la revendication 14, **caractérisé en ce que** des dents, des aspérités (14) ou éléments similaires sont réalisés sur des zones de bordure extérieures (30) de la surface de support (12).

17. Support de garniture de friction selon l'une quelconque des revendications 12 à 16, **caractérisé en ce que** les dents, les aspérités (14) ou éléments similaires sont agencés sur la surface de support (12) en rangs, bandes ou similaires sensiblement parallèles.

18. Support de garniture de friction selon la revendication 17, **caractérisé en ce que** les dents, les aspérités (14) ou éléments similaires de rangées voisines sont décalées les unes par rapport aux autres.

19. Support de garniture de friction selon l'une quelconque des revendications 12 à 18, **caractérisé en ce que** le support de garniture de friction (10) est réalisé en métal, de préférence en acier ou un matériau similaire.

20. Support de garniture de friction selon l'une quelconque des revendications 12 à 19 en combinaison avec une garniture de friction ou garniture de frein, **caractérisé en ce que** la garniture de friction ou garniture de frein est pressé sur la surface de support (12), les dents, les aspérités (14) ou éléments similaires s'enfonçant dans la garniture de friction ou garniture de frein.

21. Support de garniture de friction selon la revendication 20, **caractérisé par** l'utilisation dans un frein à tambour ou frein de stationnement pour des véhicules, en particulier des véhicules à moteur.
